# EUROPEAN PATENT APPLICATION

(11) **EP 1 881 576 A1**
(43) Date of publication of application: **23.01.2008**
(21) Application number: 06425510.2
(22) Date of filing: 21.07.2006
(51) Int. Cl.: H02G 3/06

(54) **Cable gland assemblies**

(71) Applicant: Legrand S.p.A., 20080 Zibido San Giacomo MI (IT)
(72) Inventor: Garassino, Luca, 15067 Novi Ligure (Alessandria) (IT); Fornasiero, Enrico, 15070 Lerma (Alessandria) (IT)
(74) Representative: Deambrogi, Edgardo

(57) **Abstract**

A mechanically-tightened connector (10) for cable conduit systems is described, comprising:
a main axially-hollow body (20) adapted to house by insertion a cable conduit element (12) and having a threaded portion (30) for connecting a locknut (26) of the connector;
a retaining member (22) for retaining the cable conduit element (12) inside the body (20) of the connector (10) and formed separately from it, adapted to resist traction and prevent the element (12) from being pulled out, including a tubular structure (34), adapted to engage in a terminal portion of the cable conduit element (12);
a resiliently deformable sealing ring (56), designed to surround the cable conduit element (12) in the inserted condition and adapted to undergo radial compression when the nut (26) is tightened onto the body (20) of the connector (10) so as to squeeze the profile of the cable conduit element (12) and create a seal against external agents; and
a backing element (24; 72) adapted to axially hold the retaining member (22) in a preassembled untightened arrangement ready to receive the said cable conduit element (12).

## Description

The present invention concerns fittings for cable conduit systems and, in particular, a connector for cable conduit systems. Specifically, the invention concerns a mechanically-tightened connector for plastics, metal or metal/plastics cable conduits, of the type defined in preamble of claim 1.

In a cable conduit system, the hoses or tubes (both metal and plastics) for containing and guiding a bundle of electrical cables are connected to a drilled panel of an installation electrical device, such as an electrical panel board, or to the drilled wall of an element of a cable-carrier system, such as a cable duct or a connecting box, by means of respective connector fittings that can be made of metal or a plastics material.

Plastics cable conduits comprise smooth hoses with a smooth inner surface to encourage the cables to slide, or spiral hoses to offer greater mechanical strength, made of PVC or polyamide, and possibly covered in steel wire braid for industrial applications in environments where there is a risk of incandescent sparks or in the presence of mechanical machining work.

Metal/plastics cable conduits comprise hoses with a steel or galvanised steel metal core and a corrugated inner surface, covered in PVC with high abrasion-resistance characteristics and, possibly, with an outer metal braid of galvanised steel wire.

By contrast, completely metal cable conduits include galvanised steel flexible hoses with a single or double seaming and a corrugated inner surface, bare or covered by a galvanised steel outer braid, and are suitable for environments with a high fire risk, due to the total absence of plastics materials.

A typical connector fitting according to the prior art has a hollow cylindrical or prismatic body, with a generally circular-section axial cavity, adapted to securely accommodate by insertion a cable conduit element such as a hose or a tube. At the opposite end to the section into which the cable conduit element is introduced, the connector has an axial tubular section for coupling to a wall delimiting a space for housing the cables. This section has smaller transverse dimensions than those of the connector body so that it is adapted to pass through an opening of a corresponding diameter made in the wall, and emerging on the opposite side, and has a threaded outer surface so that the connector is coupled to the wall by screwing a ring nut onto the portion of the section emerging from the opening inside the space housing the cables. The connector is secured against the wall by fully tightening the ring nut.

The cable conduit element is typically fitted onto a retaining member inside the main body of the connector, of a tubular shape, adapted to resist traction and to prevent the cable conduit from being pulled out.

The hermetic seal between the cable conduit and the connector is guaranteed by a special sealing ring, while the electrical continuity in the metal connectors is assured by the retaining member in the form of a metal screw base which is screwed up inside the cable conduit, protecting the cable.

Such a mechanically-tightened connector offers high resistance to traction and vibrations.

Disadvantageously, when connecting a cable conduit to a connector of a known type, the disassembled parts of the connector (body, retaining screw base, sealing ring and locknut) must be fitted separately, in the reverse order, onto the cable conduit, by screwing up the screw base inside the terminal section of the cable conduit and sealing the cable conduit by fully tightening the locknut.

The drawback of this solution is that an installer is obliged to gather together the component parts of the connector (or dismantle a pre-assembled connector) and fit the individual components onto the cable conduit in sequence, to the detriment of the speed and convenience of operation.

EP 0 347 051 refers to a simplified flexible cable conduit connector.

The connector described in EP 0 347 051 includes a body having a sleeved inner portion, formed with a helical groove so as to engage with a helical profile on the inner surface of the cable conduit. The sleeved portion is surrounded by an externally threaded portion arranged to receive a nut to tighten the connector, and between them there is an annular space designed to receive an end section of the cable conduit. A resiliently-deformable sealing member is placed between the body of the connector and the locknut and is adapted to undergo radial compression when the nut is tightened so as to engage the outer surface of the cable conduit and render the connection between the cable conduit and the connector impervious to liquids.

Disadvantageously, the cable conduit is retained on a connector of this type solely by friction between the end section of the conduit and a few components of the connector, and specifically between the inner surface of the conduit and the grooved portion of the sleeve, as well as between the outer surface of the conduit and the sealing ring which is pressed around it as the connector is tightened.

Furthermore, as the sleeve portion is integral with the body of the connector, the coupling between an internally spiralled cable conduit and the connector itself occurs by relative screwing of the two parts, i.e. in one of the following two ways:
i) by screwing the connector onto the conduit, which necessarily means that the connector is not yet connected to the wall; or
ii) by screwing the conduit onto the connector sleeve, which may be fixed to the wall, with consequent twisting and risk of damaging the conduit if the latter has already been connected at the opposite end to a structure or a fixed accessory.

The object of the present invention is to provide a satisfactory solution to the above-described problems, avoiding the drawbacks of the prior art.

In particular, the object of the present invention is to provide a connector that affords greater rapidity and ease of installation and admits the possibility of using with all types of cable conduits while providing the degree of IP protection that can be achieved using state-of-the-art connectors.

According to the present invention this object is achieved by a mechanically-tightened connector having the characteristics described in claim 1.

Further features and advantages of the invention will become clear from the following detailed description which is given with reference to the appended drawings which are provided purely by way of a non-limiting example, and in which:
Figure 1 is an exploded perspective view of a first embodiment of the connector according to the invention;
Figure 2 is an exploded perspective view of a second embodiment of the connector according to the invention, differing in the wall-connection section;
Figures 3a-3c show a variant of the cable conduit element retaining means in a metal connector;
Figure 4 shows another variant of the cable conduit element retaining means in a metal connector;
Figure 5 shows another variant of the cable conduit element retaining means in the form of a modification of the variant shown in Figure 4;
Figure 6 is a perspective view of an embodiment of the cable conduit element retaining means in a plastics connector;
Figure 7 is a perspective view of an assembly of the cable conduit element retaining means and of the opposing and sealing means, in a plastics connector;
Figure 8 is a perspective view of an assembly of the cable conduit element retaining means and of the opposing and sealing means in an integrated variant embodiment;
Figures 9a and 9b are, respectively, longitudinal sections of the connector according to the invention, in a pre-assembled configuration with the connector untightened, adapted to enable the coupling of a cable conduit element, and in a configuration with the connector tightened with the effect of locking and sealing;
Figure 10a is a perspective view of an alternative arrangement of the cable conduit element retaining means; and
Figures 10b and 10c are longitudinal sections of the connector according to the invention illustrating the alternative configuration of the retaining means shown in Figure 10a, in a pre-assembled configuration with the connector untightened and in a configuration with the connector tightened, respectively.

With reference to the drawings, 10 generally shows a fitting for connecting a cable conduit element 12 to a wall delimiting a space for housing and distributing the cables. At one end, it has a first section 10a designed to connect with the cable conduit element, and at the opposite end a section 10b designed to connect with the wall (not shown).

The cable conduit element can be made entirely of plastics, entirely of metal or of metal and plastics and have a smooth or corrugated inner surface 14, and a smooth, spiralled or braided outer surface 16. For simplicity, the drawings show a smooth PVC conduit, but a person skilled in the art would easily understand how the connector according to the invention could also be used with conduits of any of the above-mentioned types.

The connector 10 comprises a main axially-hollow cylindrical body 20, a cable conduit retaining member 22, an opposing and sealing member 24 and a locknut 26.

The body 20 includes an externally threaded cylindrical portion 30 onto which the locknut 26 screws, which extends from a hexagonal flange 32, on the opposite side to the section that couples to a wall.

The retaining member 22 is formed by a tubular structure 34 having a cylindrical enveloping surface, adapted to engage in a terminal portion of the cable conduit element and to accommodate the cables inside itself. According to a first arrangement, the tubular structure 34 terminates at one end in a flange 36 for the axially abutting of the conduit element. It has at least one toothed interference formation 40 adapted to engage with the inner surface 14 of the conduit element so as to offer resistance to traction and prevent the conduit from being pulled out.

Advantageously, the structure 34 has a plurality of toothed interference formations 40 distributed over its tubular enveloping surface, preferably along a helical line, adapted to engage an inner surface of a cable conduit element, by incision of a smooth inner surface or by insertion into grooves or cavities made on a corrugated inner surface of the cable conduit element.

These interference formations are advantageously made as formations with flexible teeth, projecting from the lateral surface of the tubular structure and adapted to assume a deformed condition to lie substantially level with the surface of the tubular structure so as to enable the introduction of the cable conduit element. In the deformed condition, they press resiliently against the inner surface of the conduit element and are therefore capable of jamming against that surface if the element is pulled, thus preventing it from being pulled out.

The retaining member may be made of plastics material or metal material, in the latter case for connecting metal or metal/plastics cable conduits so as to ensure electrical continuity between the conduit element and the connector. It may possibly be freely rotating about its own axis of symmetry in a connector-untightened preassembled arrangement.

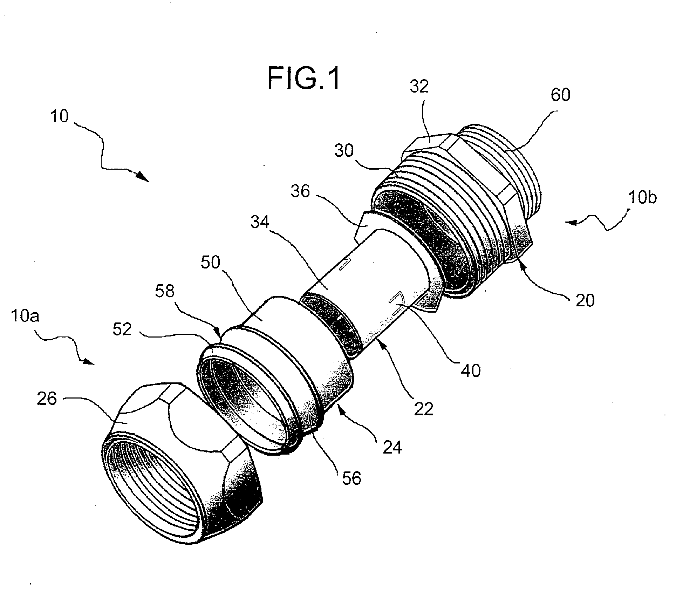

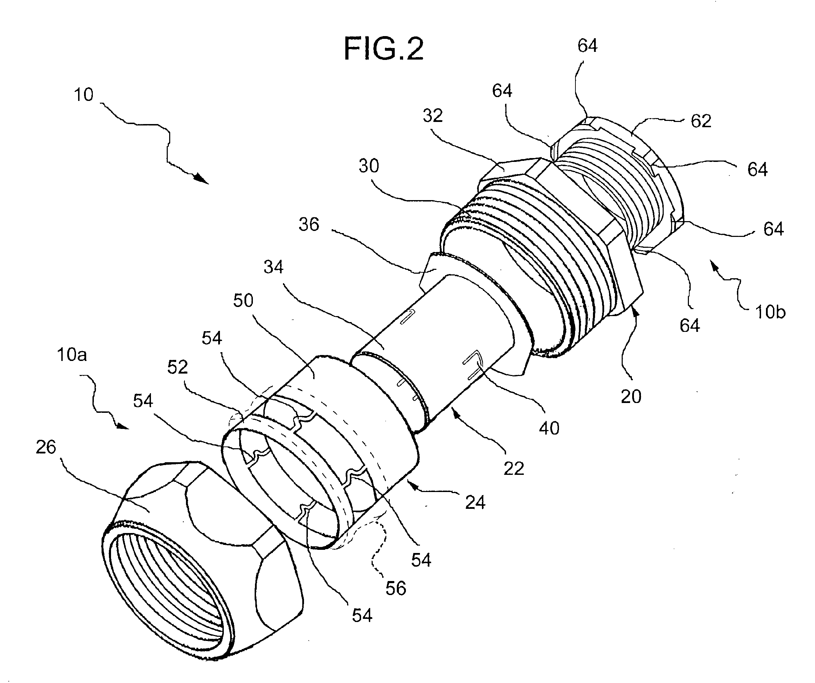

In one embodiment of a metal connector, shown in Figures 1 and 2 and made preferably of nickel-plated or galvanized brass, the structure 34 is a tubular body formed by drawing which has on its lateral surface a plurality of rigid tangential interference fins 40, facing the flange 36 with their free end at least partially raised in relation to the surface of the body 34, so as to be able to cut into a smooth plastics inner surface of a plastics cable conduit element, or to be able to engage in grooves or cavities defined in a corrugated inner surface of a metal or metal/plastics cable conduit element.

The fins 40 are evenly arranged on the lateral surface of the retaining member's body, preferably along a helical curve.

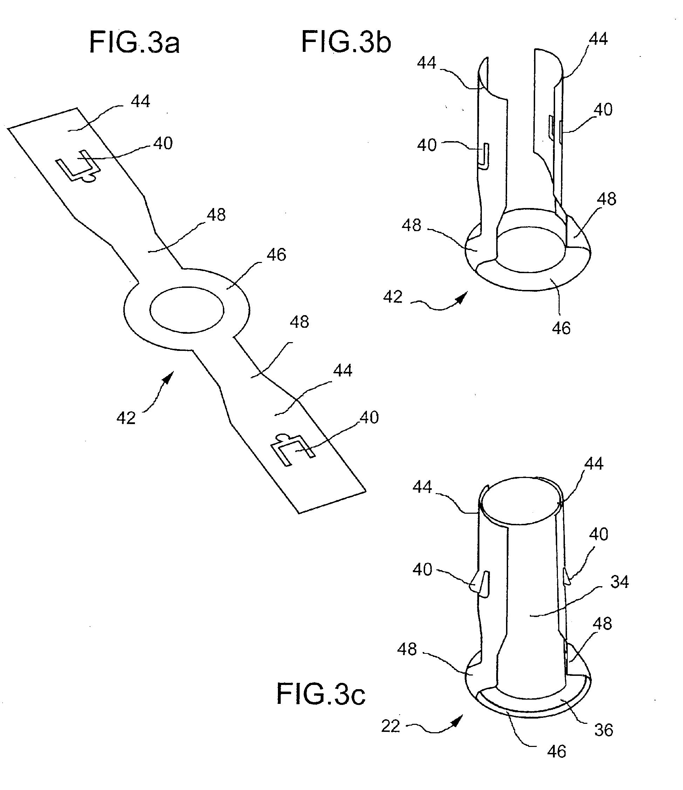

In a variant shown in Figures 3a-3c, the tubular body 34, also formed by drawing, has a smooth lateral surface, and fitted onto it is a metal covering 42 which is resiliently deformable like a spring and has at least one pair of interference fins 40.

In the embodiment shown, the spring is formed by a pair of curved longitudinal tongues 44 that face each other and can be resiliently opened out, which extend from an annular base 46, to which they are connected by a neck portion 48 of smaller transverse dimensions, capable of being bent into an S in the formation of the spring. Naturally, a person skilled in the art could design similar embodiments, of similar efficiency, with three or more tongues, arranged at regular intervals around the circumference of the annular base.

Such a covering spring is advantageously made by cutting and bending a single piece of shaped sheet metal, as shown in Figures 3a and 3b.

In the assembled arrangement of the retaining member 22 according to this variant (Figure 3c), the flange 36 of the tubular body is held between the annular base 46 of the spring and the neck portions 48 bent as clips and the tongues wrap round the tubular body 34 at least partly surrounding the longitudinal portions that are diametrically opposite the lateral surface.

This solution can be adopted preferably in the embodiment of small retaining members (for example, with a diameter of 8, 10 or 12mm), in which it is difficult to make the fins 40 directly on the drawn tubular body.

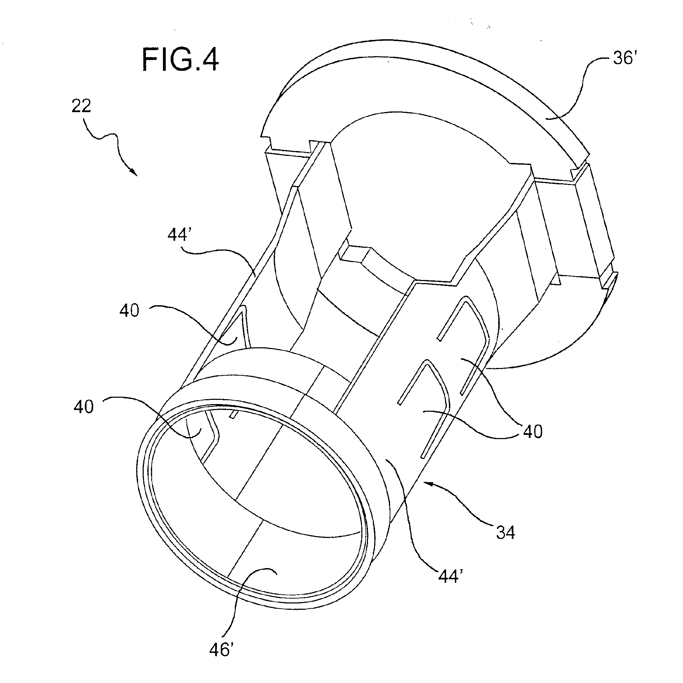

In a different embodiment shown in Figure 4, the structure 34 is composed of a pair of curved longitudinal tongues 44' having rigid tangential interference tabs 40, seamed or welded to an annular flange 36' and supported (by seaming or welding), at the opposite end, by a head support ring 46', or - according to obvious variations not shown - by a larger number of tongues, arranged at regular intervals around the circumference of the head ring 46'. The tongues 44' and the supporting ring 46' define a tubular enveloping surface of the structure 34 surrounded by the cable conduit element in the inserted condition, but a tubular body that is laterally closed, difficult to achieve by drawing, is not formed.

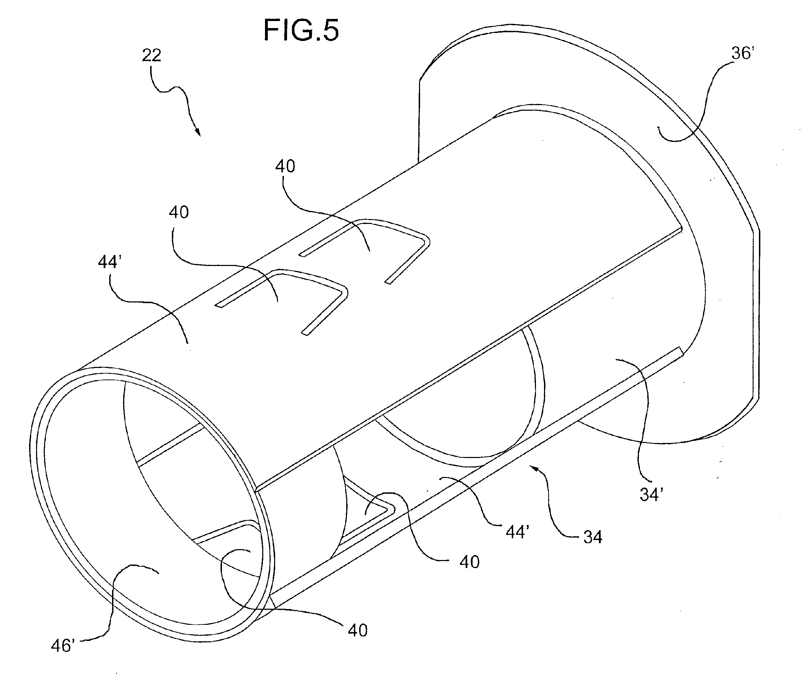

In a variant of the embodiment of Figure 4, shown in Figure 5, the flange 36 extends from its inner edge into the structure 34 as a tubular body 34' (obtained by drawing and cutting) serving to support the ends of the tongues 44' opposite the head ring 46'. In this way the cables are protected from the seaming cut ends of the tongues on the flange and the tubular body 34 ensures internal closure at the base of the connector even in the event of the end portion of the cable conduit element being incorrectly cut. The tongues 44' are connected to the head ring 46' and to the tubular body 34' (or to the flange 36') by seaming or welding.

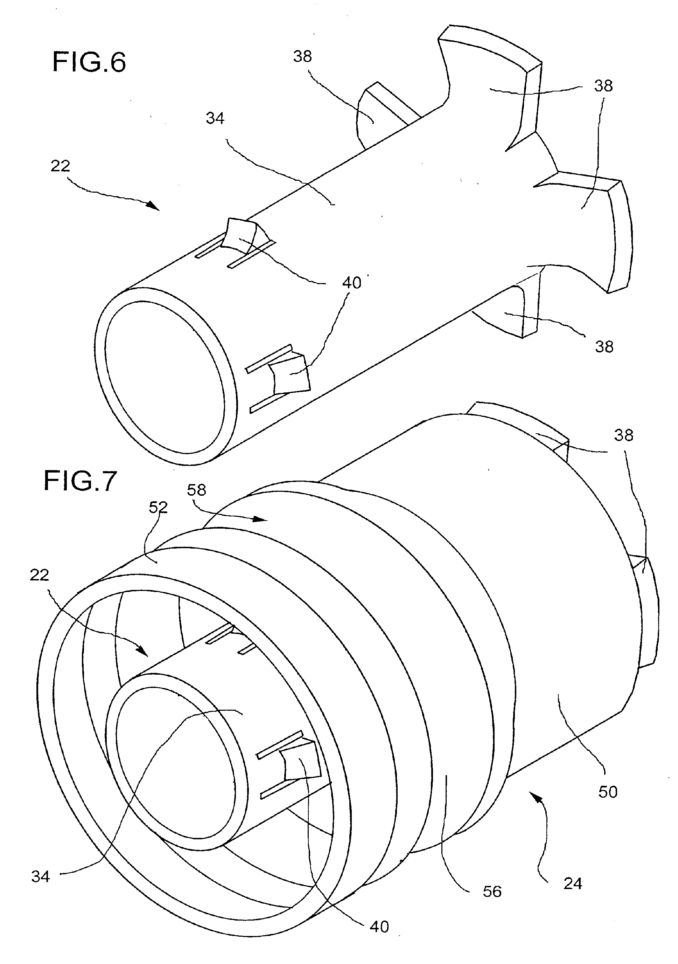

In one embodiment of a plastics connector, shown in Figure 6, the structure 34 of the retaining member 22 is a plastics tubular body terminated by a discontinuous abutting flange, for example made of a plurality of petal formations 38, arranged at regular intervals along a circumference, which has on its lateral surface a plurality of interference teeth 40, regularly arranged, for example along a helical curve, supported by flexible tongues and adapted to engage in grooves or cavities made in a corrugated internal surface of a cable conduit element.

The opposing and sealing member 24 (refer again to Figures 1 and 2) takes the form of a plastics circular cylindrical bush, coaxial with the retaining member 22, and has a transverse dimension such as to be able to be inserted sliding into the main body 20 of the connector and surround the cable conduit element 12 in the inserted condition.

It comprises a first rigid annular portion 50 and a second adjacent rigid annular portion 52, preferably larger in diameter and shorter than the first portion, connected together by means of thin longitudinal connecting tongues 54, substantially coplanar with the lateral surfaces of the said portions.

The tongues 54 have an undulating, substantially S-shaped, form, adapted to guide their deformation as the portions 50 and 52 approach each other.

These tongues as a whole constitute the supporting frame for a sealing ring 56 made of a resiliently deformable material (shown by dotted lines in Figure 2 so that the underlying tongues can be seen), which can be produced by being moulded together with the rigid portions 50, 52 and shaped so as to form an outer circumferential groove 58.

Figure 7 shows, in an example of a plastics connector, the arrangement of the opposing and sealing means 24 abutted against the flange 38 of the retaining member 22 of the cable conduit element in the embodiment shown in Figure 6.

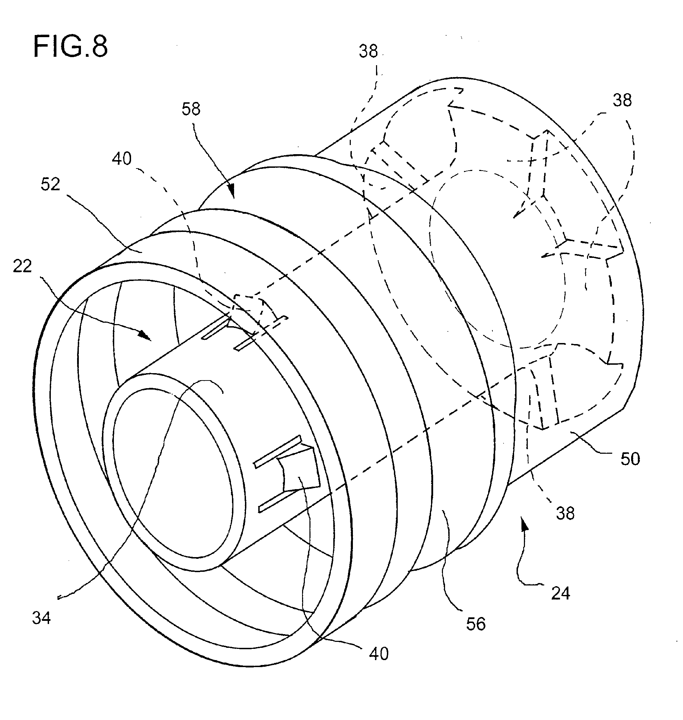

In a variation, the plastics retaining member 22 and at least the first annular portion 50 of the opposing member 24 are integrated to form a single component, as shown in Figure 8, which can be moulded in one piece.

In the embodiment shown in Figure 1, in the wall-connection section 10b, the connector has an axial tubular portion 60 having a threaded outer surface, constituting the male element of the wall-fixing means.

The threaded tubular portion 60 has smaller transverse dimensions than those of body 20 so that it is adapted to pass through an opening of corresponding diameter in a panel or wall, to emerge on the opposite side.

The connector is fixed to the wall by screwing a threaded ring nut (not shown) onto the portion 60 emerging from the opening. Screwing the ring nut fully home tightens the connector onto the wall.

In the embodiment shown in Figure 2, the wall-connection section 10b is terminated by flange 32 and the inner cylindrical wall of the body 20 is threaded (not visible in the drawing) and forms the female element of the wall-fixing means.

The hexagonal flange 32 defines a stop surface for the abutment of the connector against the wall (not shown), around the opening for introducing/extracting some of the cables.

A complementary fixing portion 62 for fixing the connector to the wall, having an annular body from which an externally threaded axial tubular portion emerges, constitutes the male element of the wall-fixing means, adapted to engage by screwing, from the opposite side of the wall and through the opening made therein, into the internal thread of the body 20.

The annular body of the fixing portion 62 also has a plurality of anti-unscrewing projections 64, radially external to the threaded portion and circumferentially offset in relation to each other, facing the wall to which the connector is to be joined. They combine to lock the wall-fixing portion in the installed position by friction and, in the case of metal connectors, to guarantee the electrical continuity of the system consisting of the connector fitting and the wall to which it is fixed (including the case of painted sheet steel panels).

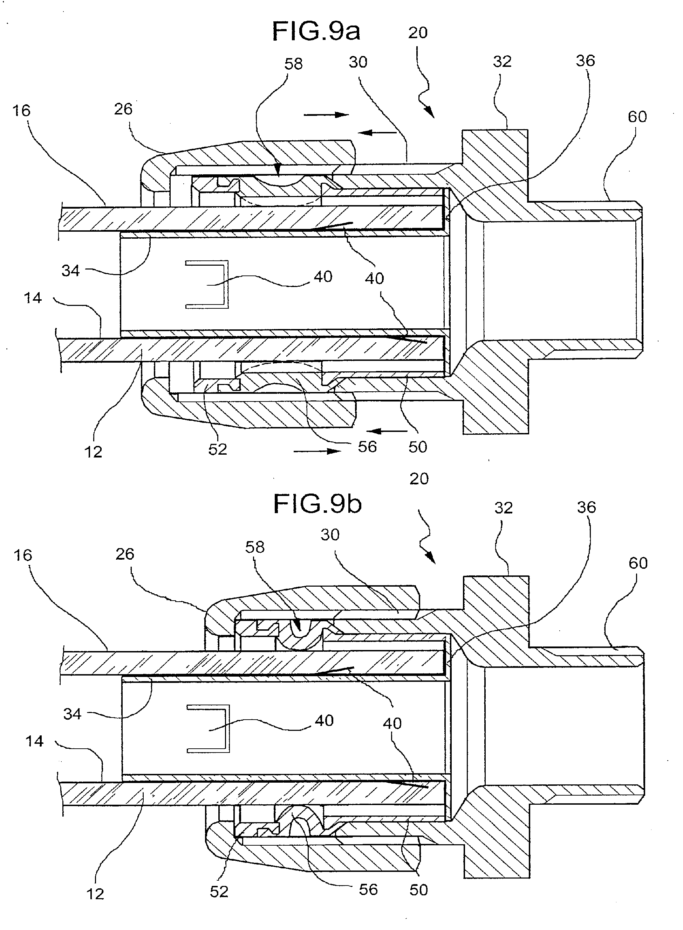

The operation of the connector fitting according to the invention is described with reference to Figures 9a and 9b, relating respectively to an untightened assembly arrangement and a tightened assembly arrangement of a metal connector. Naturally, the same considerations would apply to a plastics connector.

Advantageously, the connector according to the present invention is provided in a preassembled arrangement for supply and storage, in which the cable conduit retaining member 22 and the opposing and sealing member 24 (or the corresponding integrated component) are gathered inside the main body 20, and closed by the locknut 26 only partially screwed onto the thread 30 (Figure 9a), meaning that the connector is therefore untightened, enabling, if necessary, the rotation and albeit minimum axial travel of members 22 and 24 (or the corresponding integrated component) therein. At the same time, the opposing member 24 constitutes a backing formation for axially holding the retaining member inside the body of the connector in the opposite direction to the direction of introduction of the cable conduit element.

This makes matters easier for an installer who, when the connector is to be used, does not need to gather together its constituent parts but has available a connector that is already assembled, which can thus be conveniently fixed to the wall, before receiving the cable conduit element, by means of a "quick-fit" operation.

The cable conduit element is connected by pushing it into the body of the connector 20 through the locknut 26 pre-fitted in the untightened condition, such insertion being guided by the opposing member 24 until the conduit element abuts against the flange 36 of the retaining member 22. By pushing the conduit element in the direction of introduction, the fins 40 are temporarily closed on the surface of the tubular body 34 of the retaining member, enabling the cable conduit to slide until it is fully inserted.

The connector is then tightened by screwing the locknut fully home (shown by the opposing arrows in Figure 9a), this operation simultaneously locking the inserted cable conduit in place and creating a seal against external agents (Figure 9b).

In fact, due to the effect of tightening the connector, the opposing and sealing member 24 is subjected to an axial compression force, causing it to press against the abutment flange of the retaining member 22 in a direction opposite to the direction in which the cable conduit element might be pulled out. The locknut acts directly on an annular profile at the end of the rigid annular portion 52 of the member 24 and first causes an axial translation of the entire device to the position of abutment against the flange of the retaining member (in the embodiment in which the said devices are separate), then, as the nut is progressively tightened, causes the possible travel of the retaining member to a stop position of abutment against a shoulder surface made inside the body 20, and lastly the compression of the member 24 with the rigid annular portion 52 being drawn towards the rigid annular portion 50 abutted against the flange of the retaining member by deformation of the connecting tongues between the two parts.

This action causes inward radial deformation of the sealing ring 56 which surrounds the cable conduit element in the inserted condition, by virtue of the particular conformation of the ring 56, that is of the presence of the circumferential groove 58, so as to squeeze the profile of the cable conduit element and create a seal between the profile of the said element and the connector against external agents.

Any attempt at pulling out the cable conduit, in the opposite direction to the direction of extension of the tabs 40, would push the latter upwards and cause them to penetrate the inner surface of the conduit, in the case of plastics conduits, or cause them to engage in the grooves in the inner surface of the conduit, in the case of metal or metal/plastics conduits, which together with the axial resistance of the member 24 against the flange of the retaining member 22 prevents the conduit from being pulled out.

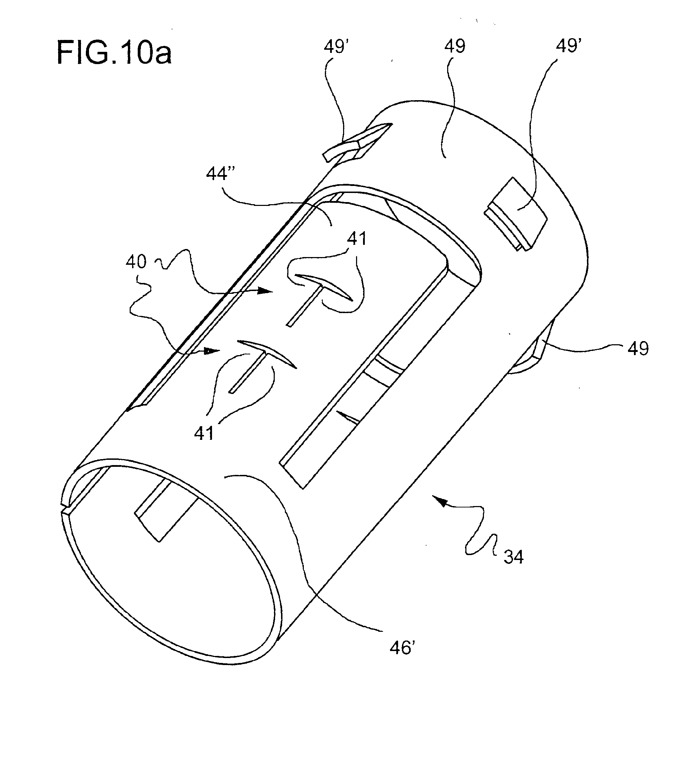

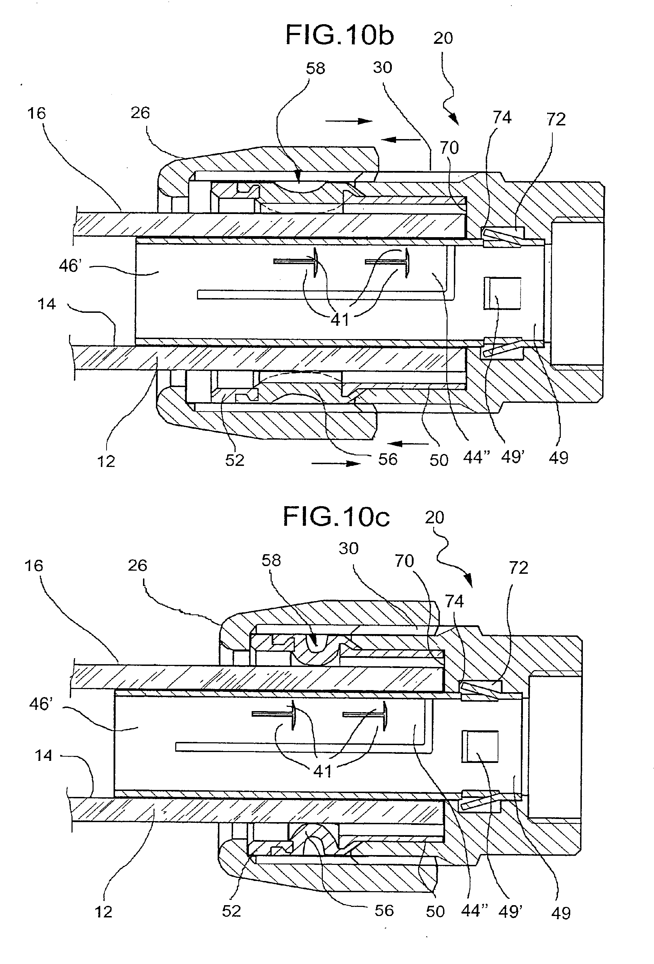

A different configuration of the retaining member 22 is also possible, as shown in Figures 10a, 10b and 10c, in which the tubular structure 34 is a tubular body without the abutment flange 36. In this case, the cable conduit element 12 abuts on an annular stop surface 70 inside the connector body, advantageously arranged at right-angles to the direction of introduction of the cable conduit element.

The tubular body 34 has curved longitudinal tongues 44" arranged between an annular head portion 46' and an annular tail portion 49, having toothed interference formations 40, obtained for example by the formation of T-shaped slits so as to define, for each slit, a pair of opposing interference edges 41 which can be lifted like scales or similar blade-like formations.

The annular tail portion 49 has anchorage fins 49', circumferentially and evenly spaced and designed, as will be more clearly explained below, to hold the retaining member inside the connector whatever the operating condition.

The tubular body 34 in this embodiment is formed in one piece by cutting and rolling a single piece of sheet metal, and the tongues are obtained by cutting respective U-shaped openings in the body 34. The purpose of the tongues 44" is to enable the interference formations 40 (consisting, as stated, of opposing edges 41) to have better resilience when connecting the cable conduit element to the retaining member.

In this configuration, as shown in Figures 10b and 10c, the connector body 20 has a circumferential groove 72 adapted to receive the anchoring tabs 49' in the raised condition, whose annular wall 74 facing the terminal section 10a of the connector constitutes a backing formation to hold the retaining member 22 inside the body of the connector.

In this configuration too, the retaining member may if necessary be freely rotating about the axis of the connector, at least before the connector is tightened, when the compression of the sealing ring 56 all around the cable conduit element cooperates in mechanically holding the conduit/retaining member assembly to prevent any translation and rotation.

The operation of the connector fitting in this different configuration is the same as described above.

Figures 10b and 10c show a connector with female wall-fixing connection means (the same as those shown in Figure 2). The connector is provided in a preassembled arrangement for supply and storage, in which the cable conduit retaining member 22 and the opposing and sealing member 24 are collected inside the main body 20, and closed by the locknut 26 only partially screwed up, meaning that the connector is therefore untightened, enabling, if necessary, the rotation of both members and an albeit minimum axial travel of the opposing member 24.

The cable conduit element is connected by pushing it into the body of the connector 20 through the locknut 26 pre-fitted in the untightened condition, such insertion being guided by the opposing member 24 until the cable conduit element abuts against the stop surface 70 of the body 20.

The retaining member 22 is held inside the body of the connector by being anchored in the groove 72 by means of the tabs 49', simultaneously locking the cable conduit in place by virtue of the interference blades engaging on its inner surface.

The connector is tightened by screwing the locknut fully home. The opposing and sealing member 24 is subjected to an axial compression force, causing it also to press against the stop surface 70 of the body of the connector. The effect of tightening also causes inward radial deformation of the sealing ring 56 that surrounds the cable conduit element in the inserted condition and creates a seal between the profile of the said element and the connector against external agents.

Naturally, the principle of the invention remaining the same, the forms of embodiment and the details of construction may be varied widely with respect to those described and illustrated, which have been given purely by way of example, without thereby departing from the scope of the invention defined by the appended claims.

This applies particularly to any degrees of freedom of the retaining member and the opposing member in the preassembled and/or assembled arrangements of the connector. Alternative embodiments to those described may be envisaged in which, in order further to increase the ease of assembly, the retaining member is constrained to the body of the connector so that any rotation and axial travel is prevented.

## Claims

1. A mechanically-tightened connector (10) for cable conduit systems, comprising:
a main axially-hollow cylindrical body (20) adapted to house by insertion, through a first terminal section (10a), a cable conduit element (12) for containing and guiding a bundle of electrical cables, and arranged so as to be operatively connected, at the opposite terminal section (10b), to a wall delimiting a space to house a plurality of cables, having an opening to introduce/extract some of them;
the main body having, at the first terminal section (10a), means (30) for coupling a locknut (26) of the connector;
means for retaining (22) the cable conduit element (12) inside the body (20) of the connector (10), adapted to resist traction and prevent the said element (12) from being pulled out, including a tubular structure (34) for housing the cables, adapted to engage in a terminal portion of the said element (12); and
resiliently deformable annular sealing means (56), arranged to surround the said cable conduit element (12) in the inserted condition and adapted to undergo radial compression when the nut (26) is screwed onto the body (20) of the connector (10) so as to squeeze the cable conduit element (12) and create a seal against external agents between the profile (16) of the said element (12) and the connector (10),
**characterized in that** the said retaining means (22) are formed separately from the body (20) of the connector (10), and the connector (10) includes backing means (24; 72) adapted to axially hold the retaining means (22) in a preassembled untightened arrangement arranged to receive the said cable conduit element (12).

2. A connector (10) according to claim 1, wherein the tubular structure (34) of the retaining means (22) has at least one toothed interference formation (40) adapted to engage with the inner surface (14) of the cable conduit element (12).

3. A connector (10) according to claim 2, wherein the said interference formation (40) is adapted to cut into a smooth inner surface (14) of the cable conduit element (12).

4. A connector (10) according to claim 2, wherein the said interference formation (40) is adapted to engage in a groove or cavity defined in a corrugated inner surface of the cable conduit element (12).

5. A connector (10) according to any one of the preceding claims 2 to 4, wherein a plurality of toothed interference formations (40) is arranged on the tubular enveloping surface of the structure (34) along a helical line.

6. A connector (10) according to any one of claims 2 to 5, wherein the said toothed interference formations (40) are flexible, arranged to project from the lateral surface of the tubular structure (34) of the retaining means (22) and adapted to assume a deformed condition to arrange themselves substantially level with the said surface on the introduction of a cable conduit element (12), in which they press resiliently against the inner surface (14) of the said element (12) and are therefore capable of jamming against the said surface (14) if the element (12) is pulled, thus preventing it from being pulled out.

7. A connector (10) according to any one of the preceding claims, wherein the retaining means (22) of the cable conduit element (12) has at one end a flange (36, 36', 38) for axial abutment of the cable conduit element (12) inside the connector.

8. A connector (10) according to claim 7, wherein the backing means include an opposing member (50, 52, 54) comprising at least one rigid annular portion (50) adapted to surround the said cable conduit element (12) in the inserted condition and capable of being subjected to an axial compression force due to the effect of tightening the connector (10), so as to stress the said retaining means (22) in an opposite direction to the direction in which the cable conduit element (12) might be pulled off.

9. A connector (10) according to claim 8, wherein the rigid annular portion (50) of the opposing means (50, 52, 54) is securely coupled to the said resiliently deformable annular sealing means (56).

10. A connector (10) according to claim 9, wherein the said opposing member (50, 52, 54) comprises a second rigid annular portion (52) connected to the first portion (50), with the said sealing means (56) interposed, which has an annular end profile directly facing the said locknut (26) in the assembled condition, the said second rigid annular portion (52) being capable of being drawn towards the first portion (50) due to the effect of tightening the connector (10) so as to cause the deformation of the sealing means (56).

11. A connector (10) according to claim 10, wherein the said first and second rigid annular portion (50; 52) are connected by longitudinal connecting tongues (54) substantially coplanar with the lateral surface of the said portions (50; 52).

12. A connector (10) according to claim 11, wherein the said tongues (54) have an undulating form so as to guide their deformation as the first and second annular portions (50; 52) approach each other.

13. A connector (10) according to claim 11 or claim 12, wherein these tongues (54) as a whole constitute the supporting frame for the said sealing means (56).

14. A connector (10) according to any one of the preceding claims, wherein the said sealing means include a ring of resiliently deformable material (56) shaped so as to form an outer circumferential groove (58) adapted to ease the inward radial deformation of the ring (56).

15. A connector (10) according to claim 8, wherein the said first rigid annular portion (50) of the opposing member (50, 52, 54) is adapted, in the tightened operating condition, to press against the abutment flange (36, 36', 38) of the retaining means (22).

16. A connector (10) according to claim 8, wherein the said rigid annular portion (50) of the opposing member (50, 52, 54) is integral with the retaining means (22) and connected to the flange (38) of the tubular structure (34).

17. A connector (10) according to claim 1, wherein the body (20) of the connector (10) has an inner annular axial abutment stop surface (70) for the cable conduit element (12), and the said backing devices include an annular groove (72) made in the inner surface of the body (20) of the connector (10) downstream of the abutment limit of the cable conduit element (12), adapted to receive anchoring elements (49') of the retaining means (22).

18. A connector (10) according to claim 2, wherein the said retaining means (22) are made of metal material and adapted to be used for the connection of metal or metal/plastics cable conduit elements, so as to guarantee electrical continuity between the cable conduit element (12) and the connector (10).

19. A connector (10) according to claim 18, wherein the tubular structure of the retaining means (22) includes a tubular body (34) which has on its lateral surface a plurality of rigid tangential interference fins (40) with their free end raised in relation to the said surface, the said end being adapted to engage with the inner surface (14) of the cable conduit element (12).

20. A connector (10) according to claim 18, wherein the tubular structure of the retaining means (22) includes a tubular body (34) which has a smooth lateral surface, surrounded by a resiliently deformable metal covering (42), having rigid tangential interference fins (40) with their free end raised in relation to the said surface, the said end being adapted to engage with the inner surface (14) of the cable conduit element (12).

21. A connector (10) according to claim 20, wherein the said metal covering (42) is in the form of a spring and comprises a plurality of curved longitudinal tongues (44) which can be resiliently opened out, that extend from a transverse annular base (46) to which they are connected by neck portions (48) bent into an S-shape as clips, so that in the assembled arrangement of the retaining means (22), the flange (36) of the tubular body (34) is held between the said annular base (46) and the neck portions (48) of the tongues (44), and the said tongues (44) wrap around the tubular body (34) at least partially surrounding longitudinal portions of its lateral surface.

22. A connector (10) according to claim 21, wherein the said metal covering (42) can be made by cutting and bending a single piece of shaped sheet metal.

23. A connector (10) according to claim 18, wherein the tubular structure of the retaining means (22) includes a plurality of curved longitudinal tongues (44'), provided with tangential interference fins (40) connected to an annular flange (36') for axial abutment of the cable conduit element (12) and supported, at the opposite end, by a head support ring (46'), the said tongues being arranged at regular intervals around the circumference of the head ring (46') so as to define a tubular enveloping surface surrounded by the cable conduit element (12) in the inserted condition.

24. A connector (10) according to claim 23, wherein the said annular flange (36') extends from its inner edge into the structure as a tubular body (34') serving to support the ends of the longitudinal tongues (44') opposite the head ring (46').

25. A connector (10) according to claim 2, wherein the said retaining means (22) are made of plastics and adapted to be used for the connection of plastics, metal or metal/plastics cable conduits elements (12).

26. A connector (10) according to claim 25, wherein the tubular body (34) of the retaining means (22) has on its lateral surface a plurality of interference teeth (40) adapted to engage with the inner surface (14) of the cable conduits element (12).

27. A connector (10) according to claim 17, wherein the tubular structure (34) of the retaining means (22) includes a plurality of curved longitudinal tongues (44") having tangential blade-like interference formations (41), supported by an annular head portion (46') of the structure (34) and facing an annular tail portion (49), the said tongues (44") being arranged at regular intervals around the circumference of the annular head portion (46') so as to define a tubular enveloping surface surrounded by the cable conduit element (12) in the inserted condition.

28. A connector (10) according to claim 27, wherein the tangential blade-like interference formations comprise pairs of opposing interference edges (41) which can be lifted like scales, defined by T-shaped slits made in the said tongues (44") .

29. A connector (10) according to claim 27, wherein the said annular tail portion (49) has anchoring fins (49') arranged at regular intervals over its surface, adapted to engage in an inner annular groove (72) in the body (20) of the connector (10) in the raised condition.

30. A connector (10) according to any one of claims 27 to 29, wherein the said tubular structure (34) can be made by cutting and rolling a single piece of shaped sheet metal.
